# EUROPEAN PATENT APPLICATION

(11) **EP 4 850 961 A1**
(43) Date of publication of application: **09.12.2026**
(21) Application number: 24920740.8
(22) Date of filing: 30.01.2024
(51) Int. Cl.: B60L 1/08

(54) **POWER SUPPLY CONTROL METHOD AND POWER SUPPLY CONTROL DEVICE**

(71) Applicant: Nissan Motor Co., Ltd., Yokohama-shi, Kanagawa 221-0023 (JP)
(72) Inventor: HIGUCHI, Shinsuke, Atsugi-shi, Kanagawa 243-0123 (JP); INOUE, Yuuki, Atsugi-shi, Kanagawa 243-0123 (JP)
(74) Representative: Hoefer & Partner Patentanwälte mbB
(86) International application number: PCT/JP2024/002797
(87) International publication number: WO 2025/163727

(57) **Abstract**

Provided is a power supply control method of controlling, when feeding power from a battery of a stopped electric vehicle to an air conditioning unit of a vehicle cabin, an external device, and auxiliary equipment, air conditioning power and externally-supplying power by a control device of the electric vehicle, the air conditioning power being power supplied to the air conditioning unit, the externally-supplying power being power supplied to the external device. The power supply control method includes: computing accessory power, the accessory power being a total value of the air conditioning power, the externally-supplying power, and auxiliary power, the auxiliary power being power supplied to the auxiliary equipment; setting a threshold value for the accessory power; and suppressing, when the accessory power exceeds the threshold value, the accessory power to the threshold value or below by limiting the air conditioning power.

## Description

### TECHNICAL FIELD

The present invention relates to a power supply control method and a power supply control device for an electric vehicle.

### BACKGROUND ART

JP7052673B2 discloses an electric vehicle configured to enable external power-feed with doors and windows closed, by providing a power-feed port in a front compartment.

### SUMMARY OF INVENTION

In recent years, electric vehicles configured to enable power-feed (external power-feed) from an on-vehicle battery to an external device using a charging port or the like are known. In such electric vehicles capable of performing external power-feed, cable harnesses that are used for power supply lines, such as connections of a battery, a power distributor, and so forth, tend to be thick. On the other hand, from the perspective of routing, space, and other considerations, it is desirable that the cable harness be as thin as possible as long as it is capable of transmitting the required power and so forth.

However, when the cable harness of a power supply line is to be made thin, the power capacity is decreased, and so, a fuse having a lower rated current must be used in the power supply line. Therefore, when the cable harness is made thin, the power supplied to external devices and the like tends to exceed the power capacity of the cable harness (the rated current of the fuse). In particular, in a situation in which external power-feed is performed while using an air conditioning unit of a vehicle cabin, the power supplied to the air conditioning unit and the external devices tends to exceed the power capacity of the cable harness.

An object of the present invention is to provide a power supply control method and a power supply control device that control the supplied power so as not to exceed the power capacity of the cable harness when the air conditioning unit and the external devices are used at the same time in the electric vehicle.

One aspect of the present invention is a power supply control method of controlling, when feeding power from a battery of a stopped electric vehicle to an air conditioning unit of a vehicle cabin, an external device, and auxiliary equipment, air conditioning power and externally-supplying power by a control device of the electric vehicle, the air conditioning power being power supplied to the air conditioning unit, the externally-supplying power being power supplied to the external device. This power supply control method includes: computing accessory power, the accessory power being a total value of the air conditioning power, the externally-supplying power, and auxiliary power, the auxiliary power being power supplied to the auxiliary equipment; setting a threshold value for the accessory power; and suppressing, when the accessory power exceeds the threshold value, the accessory power to the threshold value or below by limiting the air conditioning power.

### BRIEF DESCRIPTION OF DRAWINGS

[FIG. 1] FIG. 1 is a block diagram showing a schematic configuration of an electric vehicle.
[FIG. 2] FIG. 2 is a block diagram showing a configuration of a controller.
[FIG. 3] FIG. 3 is a flowchart related to power supply control.
[FIG. 4] FIG. 4 is an explanatory diagram showing a relationship between accessory power and a threshold value.
[FIG. 5] FIG. 5 is an explanatory diagram showing a supplied power limiting mode.
[FIG. 6] FIG. 6 is an explanatory diagram for a situation in which output power of a battery has fallen below a threshold value.
[FIG. 7] FIG. 7 is a flowchart of power supply control according to a second embodiment.
[FIG. 8] FIG. 8 is an explanatory diagram showing the supplied power limiting mode in the second embodiment.

### DESCRIPTION OF EMBODIMENTS

Hereinafter, embodiments of the present invention will be described with reference to the drawings.

### [First Embodiment]

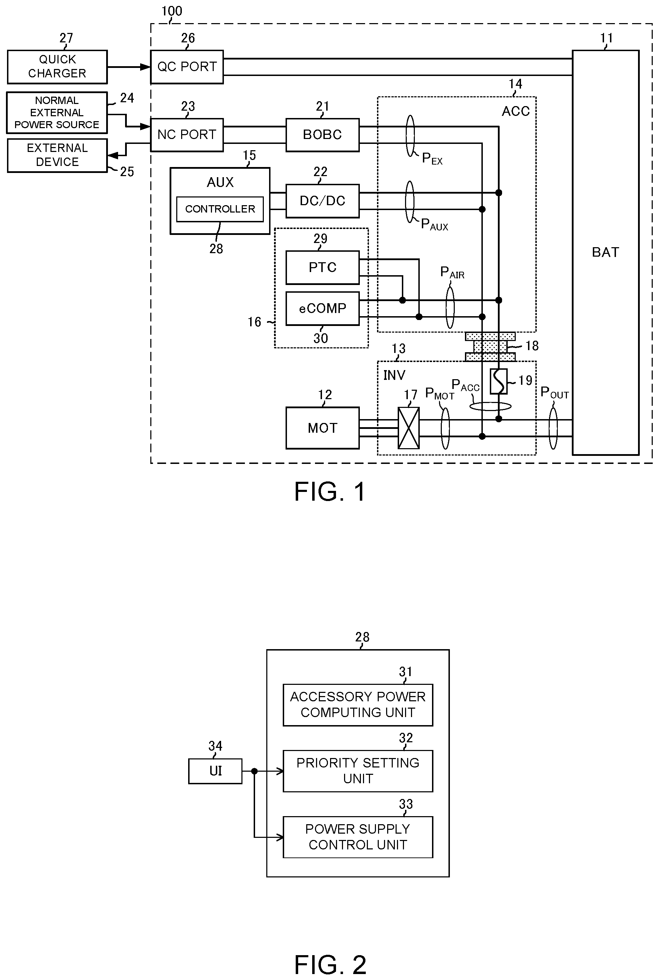

FIG. 1 is a block diagram showing a schematic configuration of an electric vehicle 100. As shown in FIG. 1, the electric vehicle 100 includes a battery 11 (BAT), a rotating electric machine 12 (MOT), an inverter 13 (INV), an accessory power box 14 (ACC), auxiliary equipment 15 (AUX), an air conditioning unit 16, and the like.

The battery 11 (BAT) is a chargeable DC power source. The battery 11 is a so-called high-voltage battery, and stores power for driving the rotating electric machine 12. In addition, with the DC electric power output by the battery 11, the power is also supplied to each component of the electric vehicle 100 driven at a relatively low voltage, such as the auxiliary equipment 15, and so forth. In other words, the battery 11 stores power for driving each component of the electric vehicle 100. The battery 11 is configured by, for example, a lithium-ion battery or the like. The output power P_{OUT} of the battery 11 can be obtained appropriately based on measurements by a voltage sensor, a current sensor, or the like, not shown. Note that in this embodiment, the output power P_{OUT} of the battery 11 represents the total amount of power that the battery 11 can output (the outputtable power). The power actually output by the battery 11 is the power requested from the rotating electric machine 10, the auxiliary equipment 15, and the like.

The rotating electric machine 12 (MOT) is an electric motor or an electric generator. In this embodiment, the rotating electric machine 12 is an electric motor that generates driving force for the electric vehicle 100, and is configured by, for example, a three-phase AC synchronous motor. The rotating electric machine 12 also functions as an electric generator that recovers the kinetic energy of the electric vehicle 100 as electrical energy when it is caused to rotate by the wheels.

The inverter 13 (INV) converts the DC output power P_{OUT} output by the battery 11 into AC electrical power by means of a bridge circuit 17, and supplies the AC electrical power to the rotating electric machine 12. The bridge circuit 17 is configured using semiconductor switching elements such as, for example, an IGBT (Insulated Gate Bipolar Transistor), a MOSFET (Metal-Oxide-Semiconductor Field-Effect Transistor), or the like.

The accessory power box 14 (ACC) is a power supply circuit that distributes the output power P_{OUT} of the battery 11 to the auxiliary equipment 15, the air conditioning unit 16, and the like. FIG. 1 shows in particular the distribution paths of the output power P_{OUT}, in other words, the power supply lines to each component.

In this embodiment, the accessory power box 14 is connected to the battery 11 via the inverter 13. Specifically, the power supply line to the accessory power box 14 is branched from the power supply line from the battery 11 to the rotating electric machine 12. Thus, in the inverter 13, the output power P_{OUT} of the battery 11 is distributed into the power supplied to the rotating electric machine 10 and the power supplied to the accessory power box 14.

In the following, the power requested by the rotating electric machine 10, in other words, the power supplied from the battery 11 to the rotating electric machine 10, is referred to as rotating electric machine power P_{MOT}. In addition, the total value of the required power of each component that receives power supply via the accessory power box 14, in other words, the total value of power supplied from the battery 11 via the accessory power box 14 to each component, is referred to as accessory power P_{ACC}.

The accessory power box 14 is connected to the inverter 13 by a cable harness 18 (a wire harness). In other words, the power supply line from the inverter 13 to the accessory power box 14 is constituted by the cable harness 18. In addition, a fuse 19 (a current fuse) is provided in the power supply line from the inverter 13 to the accessory power box 14.

The fuse 19 is an element that cuts off current flow between the battery 11 and the accessory power box 14 when a current higher than a predetermined magnitude (hereinafter referred to as rated current) flows in the power supply line to the accessory power box 14. Specifically, the fuse 19 is configured using a fuse element that is melted by Joule heat when a current equal to or greater than the rated current flows. In this embodiment, the fuse 19 is provided in the inverter 13.

The rated current of the fuse 19 is determined according to the diameter (thickness) of the cable harness 18. When the cable harness 18 is relatively thick and can supply a high current to the accessory power box 14, the fuse 19 with a high rated current is used. On the other hand, when the cable harness 18 is relatively thin and only a low current can be supplied to the accessory power box 14, the fuse 19 with a low rated current is used. In other words, the thinner the cable harness 18, the lower the rated current of the fuse 19 must be. Thus, when the thin cable harness 18 is used, the accessory power P_{ACC} may be limited by the thickness of the cable harness 18 and the rated current of the fuse 19 corresponding thereto (hereinafter referred to as "the rated current of the fuse 19"). In this embodiment, the electric vehicle 100 uses the cable harness 18 that is thinner compared to the related art, and even when the output power P_{OUT} of the battery 11 is greater than the power required for the operation of the auxiliary equipment 15 and the like, the accessory power P_{ACC} may be limited by the rated current of the fuse 19.

In this embodiment, the accessory power box 14 branches the power supply line, thereby connecting the power supply line to a bidirectional onboard charger 21 (BOBC), a DC/DC converter 22 (DC/DC), the air conditioning unit 16, and the like. In other words, the accessory power P_{ACC} is distributed to the bidirectional onboard charger 21, the DC/DC converter 22, and the air conditioning unit 16.

The bidirectional onboard charger 21 is connected to a normal charging (NC) port 23. Either a normal external power source 24 or an external device 25 is connected to the NC port 23.

The normal external power source 24 is, for example, a so-called normal charger, or an electric outlet with a 100 V or 200 V output. When the NC port 23 is connected to a normal charger, a plug attached to the normal charger is connected to the NC port 23. When the NC port 23 is connected to an electric outlet, the NC port 23 is connected to the electric outlet using, for example, a charging cable (EVSE: Electric Vehicle Supply Equipment) (not shown). When the normal external power source 24 is connected to the NC port 23, the bidirectional onboard charger 21 converts the AC electrical power supplied from the normal external power source 24 into the DC electric power, and inputs the thus-converted DC electric power to the battery 11 via the power supply line of the accessory power box 14. With such a configuration, the battery 11 is charged by the normal external power source 24.

When the external device 25 is connected to the NC port 23, the bidirectional onboard charger 21 converts the DC electric power supplied via the power supply line of the accessory power box 14 into AC electrical power, and supplies the thus-converted AC electrical power to the external device 25. In the following, the power for operating the external device 25, in other words, the power that the external device 25 requests from the electric vehicle 100, is referred to as externally-supplying power P_{EX}. Note that the voltage of the externally-supplying power P_{EX} is predetermined according to the standard of the external power-feed function, and is, for example, 100 V.

The external device 25 is, for example, a household appliance such as a rice cooker or a microwave oven, or an outdoor electrical device. A plurality of external devices 25 may be connected to the NC port 23. In this case, the externally-supplying power P_{EX} described above means the total power requested from the electric vehicle 100 by the plurality of external devices 25. When the external device 25 is a microwave oven, its power consumption is typically, for example, approximately 500 to 600 W.

Note that the electric vehicle 100 also includes a quick charging (QC) port 26 in addition to the NC port 23. A quick charger 27 supplies the DC electric power to the electric vehicle 100. Thus, when the plug of the quick charger 27 is connected to the QC port 26, the battery 11 can be directly charged by the power supplied from the quick charger 27. Therefore, the QC port 26 is connected to the battery 11 without passing through the accessory power box 14.

The DC/DC converter 22 steps down the DC electric power distributed from the accessory power box 14 and supplies it to the auxiliary equipment 15 (AUX).

The auxiliary equipment 15 is electrical equipment, electronic equipment, or the like that operates at a lower voltage compared to the rotating electric machine 12, among the various devices mounted on the electric vehicle 100. The auxiliary equipment 15 includes equipment essential for the control of the electric vehicle 100. For example, the auxiliary equipment 15 includes a controller 28. The controller 28 is constituted by one or a plurality of computers that centrally control the operation of each component of the electric vehicle 100, and the controller 28 is programmed to perform computations and the like at a predetermined control cycle.

For example, when connection of the external device 25 to the NC port 23 is detected, the controller 28 prohibits (stops) the driving of the rotating electric machine 12. In other words, only one of the rotating electric machine 12 (the bridge circuit 17 of the inverter 13) or the bidirectional onboard charger 21 becomes active. Therefore, the external device 25 can be used only when the electric vehicle 100 is stopped. In addition, in this embodiment, the controller 28 functions in particular as a power supply control device that controls the power supplied to the air conditioning unit 16 and the power supplied to the external device 25.

In the following, the power for operating the auxiliary equipment 15, in other words, the power that the auxiliary equipment 15 requests from the electric vehicle 100, is referred to as auxiliary power P_{AUX}. Note that the "auxiliary equipment" in the electric vehicle 100 may include the air conditioning unit 16, but in this embodiment, for the sake of explanation, the entirety of what is generally referred to as "auxiliary equipment" excluding the air conditioning unit 16 is referred to as the auxiliary equipment 15.

The air conditioning unit 16 adjusts the temperature of the vehicle cabin of the electric vehicle 100. The air conditioning unit 16 is configured using, for example, a PTC heater 29 (PTC: Positive Temperature Coefficient), an electric compressor 30 (eComp), and the like. The PTC heater 29 generates heat when energized. Thus, the air conditioning unit 16 uses the PTC heater 29 for cabin heating of the vehicle cabin. In a heat transport system in which heat is transferred by repeatedly evaporating (vaporizing) and condensing (liquefying) a refrigerant, the electric compressor 30 is a device that compresses and condenses refrigerant gas. The air conditioning unit 16 uses the electric compressor 30 for cabin heating, cabin cooling, or both of the vehicle cabin. Note that the electric compressor 30 also functions as an element of a cooling system that cools an electric powertrain constituted by the rotating electric machine 10, the inverter 13, and the like. In the following, the power supplied to the PTC heater 29 and the electric compressor 30, in other words, the power that the air conditioning unit 16 requests from the electric vehicle 100, is referred to as air conditioning power P_{AIR}.

FIG. 2 is a block diagram showing a configuration of the controller 28. Here, the configuration related in particular to the distribution and limitation of power to each component is shown. As shown in FIG. 2, the controller 28 includes an accessory power computing unit 31, a priority setting unit 32, a power supply control unit 33, and the like.

The accessory power computing unit 31 computes the accessory power P_{ACC}. Specifically, the accessory power computing unit 31 obtains or computes the externally-supplying power P_{EX}, the auxiliary power P_{AUX}, and the air conditioning power P_{AIR}, and computes the accessory power P_{ACC} by summing them up.

The accessory power computing unit 31 can obtain the externally-supplying power P_{EX}, the auxiliary power P_{AUX}, and the air conditioning power P_{AIR} by monitoring, using sensors (not shown), the voltage, the current, or both of each power supply line to the bidirectional onboard charger 21, the DC/DC converter 22, and the air conditioning unit 16, for example.

Note that the accessory power computing unit 31 can obtain the externally-supplying power P_{EX} from the external device 25 by, for example, communication or the like with the external device 25.

The auxiliary power P_{AUX} is the power for operating the electric vehicle 100 and is power consumed by the controller 28 and the like, and is therefore substantially a known value. Thus, the accessory power computing unit 31 can use, as the auxiliary power P_{AUX}, a value predetermined based on experiments, simulations, or the like. In this embodiment, the accessory power computing unit 31 sets the auxiliary power P_{AUX} to a predetermined fixed value.

In addition, because the performance (the power consumption) of the PTC heater 29 and the electric compressor 30 is known, the air conditioning power P_{AIR} can be estimated based on a setting of the air conditioning temperature set by the user, the actual vehicle cabin temperature, and the like. In this embodiment, the accessory power computing unit 31 has a map that associates the set temperature of the air conditioning with the air conditioning power P_{AIR} based on experiments, simulations, or the like, and by referring to this map, computes the air conditioning power P_{AIR} according to the set temperature of the air conditioning.

The priority setting unit 32 sets a priority as to whether the supply of the externally-supplying power P_{EX} or the supply of the air conditioning power P_{AIR} is to be maintained when the accessory power P_{ACC} needs to be limited.

For example, in a case in which the priority of the externally-supplying power P_{EX} is higher than that of the air conditioning power P_{AIR}, when it becomes necessary to limit the accessory power P_{ACC}, the supply of the externally-supplying power P_{EX} is maintained and the supply of the air conditioning power P_{AIR} is limited. Thus, the external device 25 can continue to be used as is, while the output of the air conditioning unit 16 is decreased or stopped. On the contrary, in a case in which the priority of the air conditioning power P_{AIR} is higher than that of the externally-supplying power P_{EX}, when it becomes necessary to limit the accessory power P_{ACC}, the supply of the air conditioning power P_{AIR} is maintained and the supply of the externally-supplying power P_{EX} is limited. As a result, the output of the air conditioning unit 16 is maintained, while the output of the external device 25 is decreased or stopped.

Note that the auxiliary power P_{AUX} is, as described above, the power for operating the electric vehicle 100, and because the auxiliary power P_{AUX} cannot be reduced (limited), it falls outside the scope of priority setting by the priority setting unit 32. It can also be said that the supply of the auxiliary power P_{AUX} is set to have the highest priority over the externally-supplying power P_{EX} and the air conditioning power P_{AIR}.

The priority setting unit 32 can accept a user setting of the priority from a user interface 34 (UI). In other words, a user of the electric vehicle 100, such as a driver, a passenger, or the like, can use the user interface 34 to perform, when it becomes necessary to limit the accessory power P_{ACC}, a setting (a priority setting) as to whether the supply of the externally-supplying power P_{EX} or the supply of the air conditioning power P_{AIR} is to be maintained. The user interface 34 is, for example, an operation button or operation screen provided on an instrument panel of the electric vehicle 100, or an operation screen on a smartphone or the like linked to the electric vehicle 100.

In this embodiment, the default priority setting (the initial setting) is a setting in which the priority of the air conditioning power P_{AIR} is higher than that of the externally-supplying power P_{EX}. Therefore, when the user has not performed a priority setting, when it becomes necessary to limit the accessory power P_{ACC}, the supply of the air conditioning power P_{AIR} is maintained and the supply of the externally-supplying power P_{EX} is limited. On the other hand, when the user sets the priority of the externally-supplying power P_{EX} to be higher than that of the air conditioning power P_{AIR}, when it becomes necessary to limit the accessory power P_{ACC}, the supply of the externally-supplying power P_{EX} is maintained and the supply of the air conditioning power P_{AIR} is limited.

In addition, the priority setting unit 32 can accept from the user interface 34 a setting that temporarily or permanently invalidates the user setting of the priority. When the user setting of the priority is invalidated, the priority setting unit 32 uses the default priority setting. Therefore, when the user sets the priority of the externally-supplying power P_{EX} to be higher than that of the air conditioning power P_{AIR}, and then the user invalidates the priority setting, when it becomes necessary to limit the accessory power P_{ACC}, the supply of the air conditioning power P_{AIR} is maintained and the supply of the externally-supplying power P_{EX} is limited.

Note that the priority setting unit 32 can automatically switch from the default priority setting to the setting in which the priority of the externally-supplying power P_{EX} is higher than that of the air conditioning power P_{AIR} when connection of the external device 25 to the NC port 23 is detected. However, in this embodiment, as described above, the switching to the setting in which the priority of the externally-supplying power P_{EX} is higher than that of the air conditioning power P_{AIR} is performed based on the operation of the user.

The power supply control unit 33 controls the power supply to each component by the accessory power box 14. In other words, the power supply control unit 33 controls the power distribution to the auxiliary equipment 15, the air conditioning unit 16, and the external device 25. Then, when it becomes necessary to limit the accessory power P_{ACC}, the power supply control unit 33 limits the air conditioning power P_{AIR} or the externally-supplying power P_{EX} in accordance with the priority setting.

Specifically, the power supply control unit 33 sets a threshold value P_{TH} for the accessory power P_{ACC}. Then, when the accessory power P_{ACC} exceeds the threshold value P_{TH} (P_{ACC} > P_{TH}), the power supply control unit 33 determines that it has become necessary to limit the accessory power P_{ACC}, and limits the air conditioning power P_{AIR} or the externally-supplying power P_{EX} in accordance with the priority setting. Thus, the power supply control unit 33 suppresses the accessory power P_{ACC} to the threshold value P_{TH} or below.

On the other hand, when the accessory power P_{ACC} is equal to or below the threshold value P_{TH} (P_{ACC} ≦ P_{TH}), the power supply control unit 33 determines that there is no need to limit the accessory power P_{ACC}, and supplies the air conditioning power P_{AIR} and the externally-supplying power P_{EX} as requested by the air conditioning unit 16 and the external device 25, respectively. In addition, when the accessory power P_{ACC} becomes equal to or below the threshold value P_{TH} while the air conditioning power P_{AIR} or the externally-supplying power P_{EX} is being limited, the power supply control unit 33 cancels the limitation and supplies the air conditioning power P_{AIR} and the externally-supplying power P_{EX} as requested by the air conditioning unit 16 and the external device 25, respectively, as described above.

The threshold value P_{TH} for the accessory power P_{ACC} is predetermined based on the magnitude of the current suppliable from the battery 11 to the air conditioning unit 16, the external device 25, and the auxiliary equipment 15 collectively.

In this embodiment, because the cable harness 18 that is thinner compared to the related art is used for the connection between the accessory power box 14 and the inverter 13, the thickness (thinness) of the cable harness 18 becomes the bottleneck for the magnitude of the current suppliable from the battery 11 to the air conditioning unit 16, the external device 25, and the auxiliary equipment 15 collectively. Therefore, the threshold value P_{TH} is predetermined based on the thickness of the cable harness 18. The thickness of the cable harness 18 and the threshold value P_{TH} have a relationship in which the thinner the cable harness 18, the lower the threshold value P_{TH}.

More specifically, the rated current is determined for the fuse 19 provided at the connection portion between the battery 11 and the accessory power box 14 according to the thickness of the cable harness 18, and this rated current of the fuse 19 becomes the bottleneck for the magnitude of the current suppliable from the battery 11 to the air conditioning unit 16, the external device 25, and the auxiliary equipment 15 collectively. Therefore, the threshold value P_{TH} is determined based on the rated current of the fuse 19. The rated current of the fuse 19 and the threshold value P_{TH} have a relationship in which the lower the rated current of the fuse 19, the lower the threshold value P_{TH}.

The power supply control unit 33 has a dynamic limit mode and a static limit mode as modes for limiting the air conditioning power P_{AIR} or the externally-supplying power P_{EX} in accordance with the priority setting when it becomes necessary to limit the accessory power P_{ACC}. In other words, when it becomes necessary to limit the accessory power P_{ACC}, the power supply control unit 33 limits the air conditioning power P_{AIR} or the externally-supplying power P_{EX} in accordance with the priority setting in either the dynamic limit mode or the static limit mode. In this embodiment, the power supply control unit 33 switches between the dynamic limit mode and the static limit mode in accordance with settings set by the user using the user interface 34.

The dynamic limit mode is a mode in which, when the accessory power P_{ACC} exceeds the threshold value P_{TH}, the maximum value (the upper limit value) of the power to be limited from either the air conditioning power P_{AIR} or the externally-supplying power P_{EX} is dynamically changed (adjusted).

In the dynamic limit mode, the power supply control unit 33 computes the surplus power P_{SUR} by subtracting, from the threshold value P_{TH}, the auxiliary power P_{AUX} and either the air conditioning power P_{AIR} or the externally-supplying power P_{EX} whose supply level is to be maintained. Then, the power supply control unit 33 sets the maximum value of the power to be limited from either the air conditioning power P_{AIR} or the externally-supplying power P_{EX} so as to be equal to the surplus power P_{SUR}.

For example, when the air conditioning power P_{AIR} is to be limited while maintaining the supply of the externally-supplying power P_{EX} according to a user setting, the power supply control unit 33 computes the surplus power P_{SUR} by subtracting the auxiliary power P_{AUX} and the externally-supplying power P_{EX} from the threshold value P_{TH}. Therefore, the surplus power P_{SUR} is computed by P_{SUR} = P_{TH} - P_{AUX} - P_{EX}. In this embodiment, because the threshold value P_{TH} and the auxiliary power P_{AUX} are fixed values, when the externally-supplying power P_{EX} is varied, the surplus power P_{SUR} is varied in response thereto. Then, the power supply control unit 33 sets the surplus power P_{SUR}, which is varied in response to a change in the externally-supplying power P_{EX} as described above, as the maximum value of the air conditioning power P_{AIR}. In other words, the air conditioning power P_{AIR} is limited to the surplus power P_{SUR} or below, which is dynamically set.

The static limit mode is a mode in which, when the accessory power P_{ACC} exceeds the threshold value P_{TH}, the maximum value (the upper limit value) of the power to be limited from either the air conditioning power P_{AIR} or the externally-supplying power P_{EX} is statically determined.

In the static limit mode, the power supply control unit 33 sets the maximum value of the power to be limited from either the air conditioning power P_{AIR} or the externally-supplying power P_{EX} to a predetermined fixed value (the set value) such as 5 kW, 3 kW, or 1 kW, regardless of the level of the externally-supplying power P_{EX} or the like. For example, when the air conditioning power P_{AIR} is to be limited while maintaining the supply of the externally-supplying power P_{EX} according to a user setting, the power supply control unit 33 sets the maximum value of the air conditioning power P_{AIR} to a predetermined fixed value (for example, 3 kW). In other words, the air conditioning power P_{AIR} is limited to the fixed value or below, which is statically set.

In the static limit mode, the maximum value of the power to be limited from either the air conditioning power P_{AIR} or the externally-supplying power P_{EX} is predetermined by calibration based on experiments, simulations, or the like. In this embodiment, the power supply control unit 33 presents a plurality of candidates to the user as the maximum value of the power to be limited from either the air conditioning power P_{AIR} or the externally-supplying power P_{EX} by means of the user interface 34, and accepts a selection made by the user. The power supply control unit 33 presents candidates by, for example, specific numerical values such as 1 kW, 3 kW, and 5 kW. In addition, the power supply control unit 33 can also present candidates without showing specific candidate values or together with specific candidate values, in a presentation form that evokes the magnitude relationship of the candidates, such as "low", "medium", "high", and so forth. The power supply control unit 33 sets one of the above candidates as a default value and uses the default value when no user setting is made.

Note that in the static limit mode, the power supply control unit 33 can set the maximum value of the air conditioning power P_{AIR} when the air conditioning power P_{AIR} is to be limited and the maximum value of the externally-supplying power P_{EX} when the externally-supplying power P_{EX} is to be limited to different respective fixed values (the set values). For example, the power supply control unit 33 can set the maximum value to 3 kW or the like when limiting the air conditioning power P_{ARI}, and can set the maximum value to 500 W or the like when limiting the externally-supplying power P_{EX}.

The operation of the power supply control in the electric vehicle 100 configured as described above will be described below.

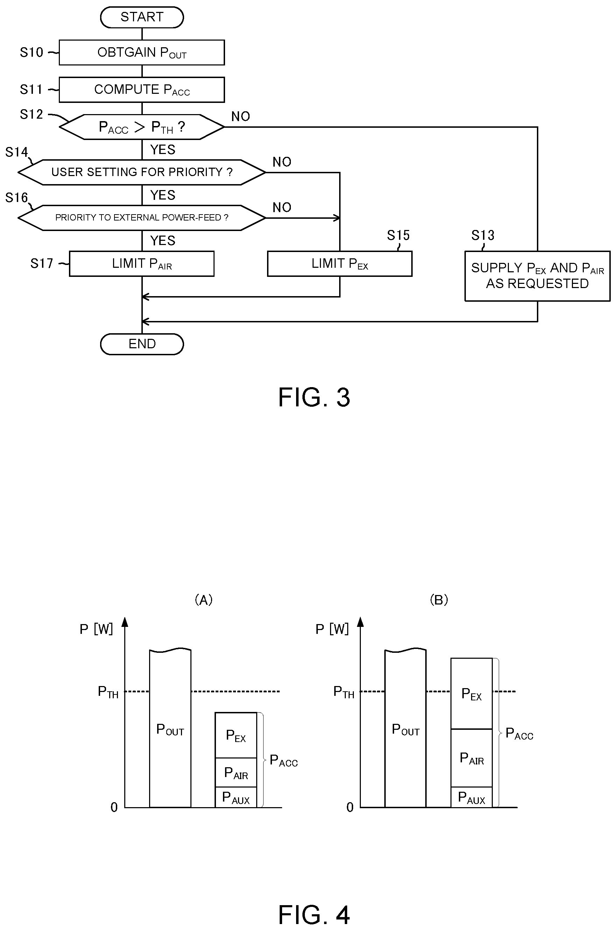

FIG. 3 is a flowchart related to power supply control. As shown in FIG. 3, in step S10, the controller 28 obtains or computes the output power P_{OUT} of the battery 11. In the situation described in this embodiment, it is assumed that the output power P_{OUT} of the battery 11 is kept sufficiently high, and that no insufficiency occurs in the output power P_{OUT} of the battery 11.

In step S11, the controller 28 computes the accessory power P_{ACC} by adding together the externally-supplying power P_{EX}, the auxiliary power P_{AUX}, and the air conditioning power P_{AIR} in the accessory power computing unit 31. Then, in step S12, the controller 28 compares the accessory power P_{ACC} with the threshold value P_{TH} in the power supply control unit 33.

In step S12, when the accessory power P_{ACC} is equal to or below the threshold value P_{TH}, the power supply control unit 33 determines that it is possible to supply the requested power to the external device 25 and the air conditioning unit 16 in addition to the auxiliary equipment 15. Thus, the process proceeds to step S13, and the power supply control unit 33 supplies the externally-supplying power P_{EX} and the air conditioning power P_{AIR} as requested by the external device 25 and the air conditioning unit 16.

On the other hand, in step S12, when the accessory power P_{ACC} is greater than the threshold value P_{TH}, the power supply control unit 33 determines that, due to the rated current of the fuse 19 (the thinness of the cable harness 18), it is unable to supply the requested power to the external device 25 or the air conditioning unit 16, and that either the externally-supplying power P_{EX} or the air conditioning power P_{AIR} must be reduced. Thus, the process proceeds to step S14, and the power supply control unit 33 confirms the user setting relating to the priority.

In step S14, when there is no user setting relating to the priority, the process proceeds to step S15, and the power supply control unit 33 suppresses the accessory power P_{ACC} to the threshold value P_{TH} or below by limiting the externally-supplying power P_{EX} in accordance with the default priority setting.

On the other hand, in step S14, when there is the user setting relating to the priority, the process proceeds to step S16, and the power supply control unit 33 suppresses the accessory power P_{ACC} to the threshold value P_{TH} or below by limiting the air conditioning power P_{AIR} or the externally-supplying power P_{EX} in accordance with the user setting.

Specifically, in step S16, the power supply control unit 33 confirms whether or not the user setting gives priority to the power-feed to the external device 25 (the external power-feed). Then, when the external power-feed is given priority according to the user setting, the process proceeds to step S17, and the power supply control unit 33 suppresses the accessory power P_{ACC} to the threshold value P_{TH} or below by limiting the air conditioning power P_{AIR}.

On the other hand, in step S16, when air conditioning is given priority according to the user setting, the process proceeds to step S15, and the power supply control unit 33 suppresses the accessory power P_{ACC} to the threshold value P_{TH} or below by limiting the externally-supplying power P_{EX}.

FIG. 4 is an explanatory diagram showing the relationship between the accessory power P_{ACC} and the threshold value P_{TH}. FIG. 4(A) is an explanatory diagram for a situation in which the accessory power P_{ACC} is equal to or below the threshold value P_{TH} (here, in particular, P_{ACC} < P_{TH}). FIG. 4(B) is an explanatory diagram for a situation in which the accessory power P_{ACC} exceeds the threshold value P_{TH} (P_{ACC} > P_{TH}). Note that here, the output power P_{OUT} of the battery 11 is sufficiently greater than the threshold value P_{TH}. In addition, the vertical axis represents power P [W].

As shown in FIG. 4(A), when the accessory power P_{ACC} is lower than the threshold value P_{TH}, the accessory power P_{ACC} can be supplied as requested. In other words, because the accessory power P_{ACC} is within the range of the output power P_{OUT} of the battery 11, the battery 11 can supply all of the accessory power P_{ACC}. In addition, because the accessory power P_{ACC} is lower than the threshold value P_{TH}, even from the perspective of the rated current of the fuse 19 (the thinness of the cable harness 18) that serves as the bottleneck, all of the accessory power A_{PCC} can also be supplied. Therefore, the power supply control unit 33 supplies the auxiliary power P_{AUX}, the air conditioning power P_{AIR}, and the externally-supplying power P_{EX} as requested by the auxiliary equipment 15, the air conditioning unit 16, and the external device 25, respectively.

On the other hand, as shown in FIG. 4(B), when the accessory power P_{ACC} exceeds the threshold value P_{TH}, the accessory power P_{ACC} cannot be supplied as requested. Specifically, the accessory power P_{ACC} is within the range of the output power P_{OUT} of the battery 11, and the battery 11 can supply all of the accessory power P_{ACC}. However, because the accessory power P_{ACC} is greater than the threshold value P_{TH}, if all of the accessory power P_{ACC} is supplied in this state, the current flowing through the fuse 19 may exceed the rated current. In other words, the reduced diameter of the cable harness 18 becomes the bottleneck, and it becomes necessary to limit the accessory power P_{ACC}.

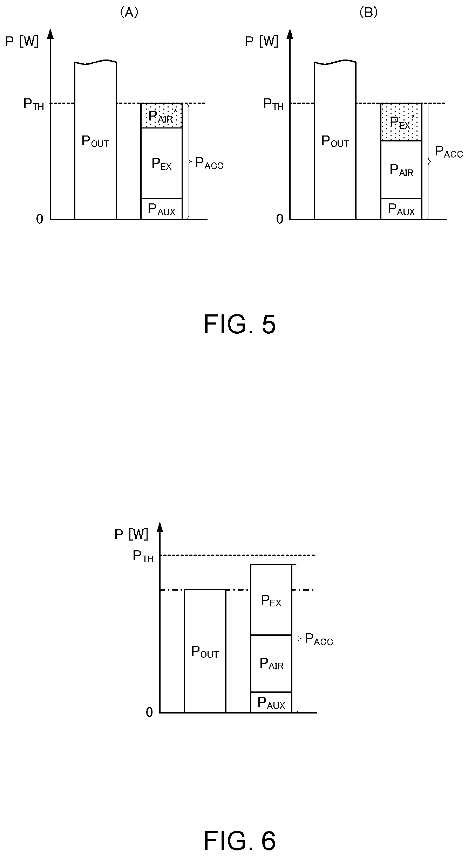

FIG. 5 is an explanatory diagram showing the supplied power limiting mode. FIG. 5(A) is an explanatory diagram for a situation in which the air conditioning power P_{AIR} is limited from the state shown in FIG. 4(B). FIG. 5(B) is an explanatory diagram for a situation in which the externally-supplying power P_{EX} is limited from the state shown in FIG. 4(B). Note that both FIG. 5(A) and FIG. 5(B) are examples in which the limitations are executed by the dynamic limit mode. In addition, the vertical axis represents power P [W].

As shown in FIG. 5(A), when the accessory power P_{ACC} exceeds the threshold value P_{TH} and the air conditioning power P_{AIR} is limited, the externally-supplying power P_{EX} is maintained. Thus, the external device 25 does not experience insufficient supplied power or the like, and can continue to be used. On the other hand, because the air conditioning power P_{AIR} is limited, the air conditioning unit 16 is supplied with only a limited air conditioning power P_{AIR}' that is lower than the originally required air conditioning power P_{AIR} according to the setting of the air conditioning temperature and the like (see FIG. 4(B)). Thus, the output of the air conditioning unit 16 may be decreased or stopped. Instead, the accessory power P_{ACC} is suppressed to the threshold value P_{TH} or below. Here, because the air conditioning power P_{AIR} is limited in the dynamic limit mode, the accessory power P_{ACC} is suppressed to the threshold value P_{TH}. In other words, even when the cable harness 18 is made thinner compared to the related art and the rated current of the fuse 19 becomes lower, the electric vehicle 100 can supply power to the air conditioning unit 16 and the external device 25 so as not to exceed the power capacity of the cable harness 18 and the rated current of the fuse 19 when the air conditioning unit 16 and the external device 25 are used at the same time.

As shown in FIG. 5(B), when the accessory power P_{ACC} exceeds the threshold value P_{TH} and the externally-supplying power P_{EX} is limited, the air conditioning power P_{AIR} is maintained. Thus, the air conditioning unit 16 does not experience insufficient supplied power or the like, and can continue to be used while maintaining the output according to the setting of the air conditioning temperature and the like. On the other hand, because the externally-supplying power P_{EX} is limited, the external device 25 is supplied with only a limited externally-supplying power P_{EX}' that is lower than the originally required externally-supplying power P_{EX} (see FIG. 4(B)). Thus, the output of the external device 25 may be decreased, or its function may be stopped (suspended). Instead, the accessory power P_{ACC} is suppressed to the threshold value P_{TH} or below. Here, because the externally-supplying power P_{EX} is limited in the dynamic limit mode, the accessory power P_{ACC} is suppressed to the threshold value P_{TH}. In other words, even when the cable harness 18 is made thinner compared to the related art and the rated current of the fuse 19 becomes lower, the electric vehicle 100 can supply power to the air conditioning unit 16 and the external device 25 so as not to exceed the power capacity of the cable harness 18 and the rated current of the fuse 19 when the air conditioning unit 16 and the external device 25 are used at the same time.

In the electric vehicle 100, when the cable harness 18 is made thin, the rated current of the fuse 19 must be made lower, so when the air conditioning unit 16 and the external device 25 are used at the same time, the current flowing through the fuse 19 may exceed the rated current. However, as described above, by setting the threshold value P_{TH} according to the thickness (the thinness) of the cable harness 18 and the rated current of the fuse 19 for the accessory power P_{ACC}, and by limiting the air conditioning power P_{AIR} or the externally-supplying power P_{EX} when the accessory power P_{ACC} exceeds this threshold value P_{TH}, and suppressing the accessory power P_{ACC} to the threshold value P_{TH} or below, it is possible to supply power to the air conditioning unit 16, the external device 25, or both of them, such that the current flowing through the fuse 19 does not exceed the rated current, even when the cable harness 18 is made thin.

Then, as in FIG. 5(A), when the air conditioning power P_{AIR} is limited, there is an advantage that the external device 25 can continue to be used normally without running short of power or the like.

Specifically, the external power-feed function of the electric vehicle is an additional function that is permitted when spare capacity is available, and normally, the primary functions of the vehicle such as driving and maintaining the vehicle cabin environment take priority over the external power-feed function. Therefore, in the electric vehicle capable of performing the external power-feed, when it becomes necessary to limit the accessory power P_{ACC} (the air conditioning power P_{AIR} or the externally-supplying power P_{EX}), the externally-supplying power P_{EX} is normally limited.

On the other hand, in a situation in which the external device 25 is being used, there are many cases in which the user compares the air conditioning unit 16 and the external device 25 and wishes to give priority to continuing to use the external device 25. In such a case, it is highly useful to provide the technology that suppresses the accessory power P_{ACC} so that the current flowing through the fuse 19 does not exceed the rated current while responding to the user's wishes by limiting the air conditioning power P_{AIR} and allowing the use of the external device 25 to continue. Therefore, the electric vehicle 100 can, for example, eliminate the inconvenience of the external device 25 experiencing a decrease in output or malfunction due to insufficient power.

In particular, in the electric vehicle 100, when it becomes necessary to limit the accessory power P_{ACC} due to the thinness of the cable harness 18 (the rated current of the fuse 19) becoming the bottleneck, priority is given to the power-feed to the external device 25 over the air conditioning unit 16 based on the user setting (user's selection). Thus, the electric vehicle 100 can appropriately respond to the user's wishes as described above.

In addition, as in FIG. 5(B), when the externally-supplying power P_{EX} is limited, there is an advantage that the air conditioning unit 16 can continue to be used with the output according to the setting of the air conditioning temperature.

Specifically, even in a situation in which the air conditioning unit 16 and the external device 25 are used together, depending on practical circumstances such as being in a very hot (cold) environment, there are cases in which the user compares the air conditioning unit 16 and the external device 25 and wishes to give priority to maintaining the output of the air conditioning unit 16. In such a case, it is highly useful to provide the technology that suppresses the accessory power P_{ACC} so that the current flowing through the fuse 19 does not exceed the rated current while responding to the user's wishes by limiting the externally-supplying power P_{EX} and maintaining the output of the air conditioning unit 16.

### [Second Embodiment]

In the first embodiment described above, the situation in which the output power P_{OUT} of the battery 11 is equal to or greater than the threshold value P_{TH} and the output power P_{OUT} of the battery 11 is sufficient has been described, but the present invention is not limited thereto. In the following, in the second embodiment, a situation in which the output power P_{OUT} of the battery 11 is lower than the threshold value P_{TH} will be described.

FIG. 6 is an explanatory diagram for a situation in which the output power P_{OUT} of the battery 11 has fallen below the threshold value P_{TH}. As shown in FIG. 6, when the output power P_{OUT} of the battery 11 falls below the threshold value P_{TH} due to, for example, a decrease in the SOC (State of Charge) of the battery 11, the accessory power P_{ACC} must be limited even when the accessory power P_{ACC} is equal to or below the threshold value P_{TH}. This is because the accessory power P_{ACC} cannot be fully covered by the output power P_{OUT} of the battery 11. In such a case, as described below, the electric vehicle 100 can suppress the accessory power P_{ACC} to the output power P_{OUT} of the battery 11 or below by limiting the air conditioning power P_{AIR} or the externally-supplying power P_{EX} in the same manner as in the first embodiment.

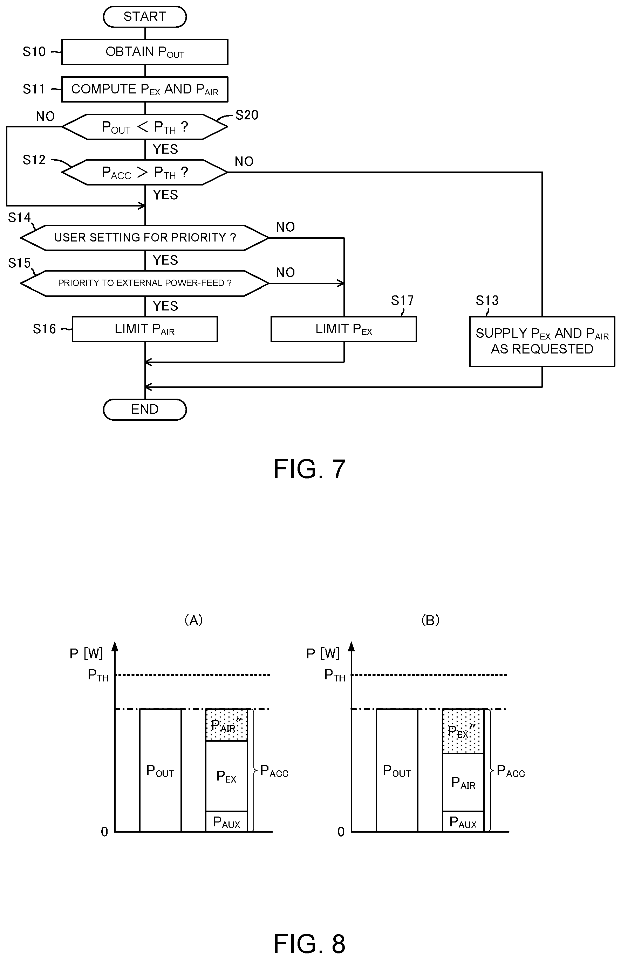

FIG. 7 is a flowchart of the power supply control according to the second embodiment. As shown in FIG. 7, in the second embodiment, a step S20 in which the power supply control unit 33 compares the output power P_{OUT} of the battery 11 with the threshold value P_{TH} is added before step S12, in which the accessory power P_{ACC} is compared with the threshold value P_{TH}.

In step S20, when the output power P_{OUT} of the battery 11 is equal to or greater than the threshold value P_{TH}, the process proceeds to step S12, and the power supply control unit 33 compares the accessory power P_{ACC} with the threshold value P_{TH}. Then, when the accessory power P_{ACC} is equal to or below the threshold value P_{TH}, as shown in step S13, the power supply control unit 33 supplies the requested externally-supplying power P_{EX} and air conditioning power P_{AIR} in the same manner as in the first embodiment. In addition, when the accessory power P_{ACC} is greater than the threshold value P_{TH}, as shown in steps S14 to S17, the power supply control unit 33 limits the air conditioning power P_{AIR} or the externally-supplying power P_{EX} by the dynamic limit mode or the static limit mode in accordance with the user setting, in the same manner as in the first embodiment.

On the other hand, in step S20, when the output power P_{OUT} of the battery 11 is lower than the threshold value P_{TH} (P_{OUT} < P_{TH}), step S12 is skipped and the process proceeds to step S14. In other words, as shown in steps S14 to S17, the power supply control unit 33 limits the air conditioning power P_{AIR} or the externally-supplying power P_{EX} in accordance with the user setting relating to the priority. At this time, the power supply control unit 33 limits the air conditioning power P_{AIR} or the externally-supplying power P_{EX} such that the accessory power P_{ACC} becomes equal to or below the output power P_{OUT} of the battery 11.

FIG. 8 is an explanatory diagram showing the supplied power limiting mode in the second embodiment. FIG. 8(A) is an explanatory diagram for a situation in which the air conditioning power P_{AIR} is limited from the state of FIG. 6. FIG. 8(B) is an explanatory diagram for a situation in which the externally-supplying power P_{EX} is limited from the state of FIG. 6. Note that both FIG. 8(A) and FIG. 8(B) are examples in which the limitations are executed by the dynamic limit mode. In addition, the vertical axis represents power P [W].

As shown in FIG. 8(A), in a case in which the output power P_{OUT} of the battery 11 is lower than the threshold value P_{TH} and the accessory power P_{ACC} exceeds the output power P_{OUT} of the battery 11, and when the air conditioning power P_{AIR} is limited, the externally-supplying power P_{EX} is maintained. Thus, the external device 25 does not experience insufficient supplied power or the like, and can continue to be used. On the other hand, because the air conditioning power P_{AIR} is limited, the air conditioning unit 16 is supplied with only a limited air conditioning power P_{AIR}" that is lower than the originally required air conditioning power P_{AIR} according to the setting of the air conditioning temperature and the like (see FIG. 6). Thus, the output of the air conditioning unit 16 may be decreased or stopped. Instead, the accessory power P_{ACC} is suppressed to the output power P_{OUT} of the battery 11 or below. Here, because the air conditioning power P_{AIR} is limited in the dynamic limit mode, the accessory power P_{ACC} is suppressed to the output power P_{OUT} of the battery 11.

As shown in FIG. 8(B), in a case in which the output power P_{OUT} of the battery 11 is lower than the threshold value P_{TH} and the accessory power P_{ACC} exceeds the output power P_{OUT} of the battery 11, and when the externally-supplying power P_{EX} is limited, the air conditioning power P_{AIR} is maintained. Thus, the air conditioning unit 16 does not experience insufficient supplied power or the like, and can continue to be used while maintaining the output according to the setting of the air conditioning temperature and the like. On the other hand, because the externally-supplying power P_{EX} is limited, the external device 25 is supplied with only a limited externally-supplying power P_{EX}" that is lower than the originally required externally-supplying power P_{EX} (see FIG. 6). Thus, the output of the external device 25 may be decreased, or its function may be stopped (suspended). Instead, the accessory power P_{ACC} is suppressed to the output power P_{OUT} of the battery 11 or below. Here, because the externally-supplying power P_{EX} is limited in the dynamic limit mode, the accessory power P_{ACC} is suppressed to the output power P_{OUT} of the battery 11.

As described above, the power supply control of the first embodiment can be applied to a situation in which the output power P_{OUT} of the battery 11 is lower than the threshold value P_{TH} and the output power P_{OUT} of the battery 11 becomes the bottleneck in the power supply to the air conditioning unit 16 and the external device 25. Then, in a situation in which the output power P_{OUT} of the battery 11 becomes the bottleneck, by performing power supply control in the same manner as the first embodiment, the electric vehicle 100 can supply power to the air conditioning unit 16 and the external device 25 so as not to exceed the output power P_{OUT} of the battery 11 when the air conditioning unit 16 and the external device 25 are used at the same time.

### [Modification]

In the first embodiment and the second embodiment described above, the power supply control unit 33 sets a maximum value (an upper limit value) for the air conditioning power P_{AIR} or the externally-supplying power P_{EX} to be limited, but the present invention is not limited thereto. For example, the power supply control unit 33 can set a minimum value (a lower limit value) for the air conditioning power P_{AIR} or the externally-supplying power P_{EX} to be limited, in addition to setting the maximum value (the upper limit value).

For example, when limiting the maximum value of the air conditioning power P_{AIR} according to the priority setting by the user, the power supply control unit 33 can further set a minimum value for the air conditioning power P_{AIR}. Then, when the air conditioning power P_{AIR} falls below the minimum value, the power supply control unit 33 can, for example, stop the power supply to the air conditioning unit 16. Similarly, when limiting the maximum value of the externally-supplying power P_{EX} according to the priority setting by the user, the power supply control unit 33 can further set a minimum value for the externally-supplying power P_{EX}. Then, when the externally-supplying power P_{EX} falls below the minimum value, the power supply control unit 33 can, for example, stop the power supply to the external device 25.

The power supply control unit 33 presets the minimum value (the lower limit value) for the air conditioning power P_{AIR} or the externally-supplying power P_{EX} to be limited, based on experiments, simulations, or the like, to, for example, a power level at which the air conditioning unit 16 or the external device 25 can operate at a minimum.

Therefore, the setting of the minimum value (the lower limit value) as described above is particularly meaningful in the dynamic limit mode. Specifically, in the dynamic limit mode, because the maximum value (the upper limit value) is dynamically varied, the air conditioning power P_{AIR} or the externally-supplying power P_{EX} may fall below the power at which the air conditioning unit 16 or the external device 25 can be operated at the minimum. In this case, it is meaningless and wasteful of power to continue supplying power at a level that does not allow the air conditioning unit 16 or the external device 25 to operate. Therefore, in the dynamic limit mode, it is preferable to set the minimum value (the lower limit value), and when the maximum value (the upper limit value) of the air conditioning power P_{AIR} or the externally-supplying power P_{EX} has decreased to the minimum value (the lower limit value) or below, to stop the power supply to the air conditioning unit 16 or the external device 25.

In addition, the setting of the minimum value (the lower limit value) as described above is particularly meaningful when the externally-supplying power P_{EX} is limited in the dynamic limit mode. In some cases, the air conditioning unit 16 can continue cabin heating with very low power, such as when performing the cabin heating using the PTC heater 29, which has already reached a constant temperature (so-called saturation temperature), for example. On the other hand, many external devices 25 cannot operate normally unless a certain level of power is supplied. Therefore, when limiting the externally-supplying power P_{EX} in the dynamic limit mode according to the setting by the user, it is preferable to set the minimum value (the lower limit value) for the externally-supplying power P_{EX}, and when the maximum value (the upper limit value) of the externally-supplying power P_{EX} has decreased to the minimum value (the lower limit value) or below, to stop the power supply to the external device 25.

In addition, the first embodiment and the second embodiment described above can be modified as follows.

When the SOC of the battery 11 decreases, the output voltage of the battery 11 decreases. Thus, when trying to supply a constant power to the external device 25 and the like, the current flowing through the cable harness 18 and the fuse 19 increases. As a result, when the SOC of the battery 11 decreases, in particular, current exceeding the rated current tends to flow through the cable harness 18 and the fuse 19. In other words, when the SOC of the battery 11 decreases, the thinness of the cable harness 18 and the rated current of the fuse 19 tend to become the bottleneck for the power supply to the air conditioning unit 16 and the external device 25. Therefore, it is preferable for the power supply control unit 33 to set a threshold value TH_{SOC} for the SOC of the battery 11, and to perform the power supply control of the first embodiment or the second embodiment when the SOC is lower than the threshold value TH_{SOC}. The threshold value TH_{SOC} for the SOC is predetermined by calibration based on experiments, simulations, or the like.

The air conditioning power P_{AIR} varies greatly according to the temperature setting of the air conditioning and the like. For example, in a situation in which the air conditioning unit 16 has just started to be used or the like, when the difference between the vehicle cabin temperature and the temperature setting of the air conditioning is large, the air conditioning power P_{AIR} tends to increase. In such a situation, current exceeding the rated current tends to flow through the cable harness 18 and the fuse 19. Especially briefly stated, when the set temperature (the target temperature) of the air conditioning unit 16 is high/low, the thinness of the cable harness 18 and the rated current of the fuse 19 tend to become the bottleneck for the power supply to the air conditioning unit 16 and the external device 25. Therefore, it is preferable for the power supply control unit 33 to set an upper limit value UL_{AIR} and a lower limit value LL_{AIR} for the set temperature of the air conditioning unit 16, and to perform the power supply control of the first embodiment or the second embodiment when the set temperature exceeds the upper limit value UL_{AIR} or when the set temperature falls below the lower limit value LL_{AIR}. The upper limit value UL_{AIR} and the lower limit value LL_{AIR} for the set temperature of the air conditioning unit 16 are predetermined by calibration based on experiments, simulations, or the like.

In the first embodiment and the second embodiment described above, for the sake of simplicity, the auxiliary power P_{AUX} is assumed to be a fixed value, but the present invention is not limited thereto. The auxiliary power P_{AUX} may include, in addition to truly essential (non-reducible) power such as the power consumed by the controller 28, reducible power such as the power consumed by interior lights. Therefore, when the accessory power P_{ACC} exceeds the threshold value P_{TH} (in the second embodiment, when the accessory power P_{ACC} exceeds the output power P_{OUT} of the battery 11), the power supply control unit 33 can reduce the auxiliary power P_{AUX} by, for example, turning off interior lights. In this way, by reducing the auxiliary power P_{AUX}, the amount of limitation of the air conditioning power P_{AIR} or the externally-supplying power P_{EX} is reduced.

In addition, when the accessory power P_{ACC} exceeds the threshold value P_{TH} (in the second embodiment, when the accessory power P_{ACC} exceeds the output power P_{OUT} of the battery 11), it is preferable for the controller 28 (power supply control unit 33) to notify the user of a message (advice) prompting the user to change the air conditioning temperature setting or the like via the user interface 34 or the like. If the air conditioning temperature setting or the like is changed in response to the message, the accessory power P_{ACC} may be suppressed to a level at which it is not necessary to forcibly limit the air conditioning power P_{AIR} or the externally-supplying power P_{EX}. It is preferable for the controller 28 to perform the power supply control of the first embodiment or the second embodiment when it is still necessary to limit the accessory power P_{ACC} even after notifying the user of such a message or the like.

Note that the controller 28 can execute the power supply control of the first embodiment or the second embodiment in combination with one or a plurality of the modifications described above.

As described above, the power supply control method according to any one of the first embodiment, the second embodiment, or the modifications is the power supply control method for controlling, when feeding the power from the battery 11 of the stopped electric vehicle 100 to the air conditioning unit 16 of the vehicle cabin, the external device 25, and the auxiliary equipment 15, the air conditioning power P_{AIR} and the externally-supplying power P_{EX} by the control device (the controller 28) of the electric vehicle 100, the air conditioning power P_{AIR} being the power supplied to the air conditioning unit 16, and the externally-supplying power P_{EX} being the power supplied to the external device 25. The power supply control method includes: computing the accessory power P_{ACC}, the accessory power P_{ACC} being the total value of the air conditioning power P_{AIR}, the externally-supplying power P_{EX}, and the auxiliary power P_{AUX}, the auxiliary power P_{AUX} being the power supplied to the auxiliary equipment 15; setting the threshold value P_{TH} for the accessory power P_{ACC}; and suppressing, when the accessory power P_{ACC} exceeds the threshold value P_{TH}, the accessory power P_{ACC} to the threshold value P_{TH} or below by limiting the air conditioning power P_{AIR}.

As described above, when the accessory power P_{ACC} exceeds the threshold value P_{TH} and it is not possible to supply sufficient power to both the air conditioning unit 16 and the external device 25, by performing the power supply control that limits the air conditioning power P_{AIR}, it is possible to supply power within the range of the power capacity (the rated current of the fuse 19) even when the cable harness 18 is made thinner compared to the related art. Then, while in general, when either the air conditioning power P_{AIR} or the externally-supplying power P_{EX} must be limited, the externally-supplying power P_{EX} should be limited, the power supply control method according to the first embodiment, the second embodiment, and the modifications limits the air conditioning power P_{AIR} as described above. As a result, even in a situation in which the accessory power P_{ACC} must be limited due to the thinness of the cable harness 18 and the rated current of the fuse 19, the external device 25 can continue to be used without experiencing a decrease in output or malfunction due to insufficient power. When the external device 25 and the air conditioning unit 16 are used together, many users wish to give priority to the function of the external device 25, so the continued use of the external device 25 tends to match the user's wishes.

In the power supply control method according to any one of the first embodiment, the second embodiment, or the modifications, the threshold value P_{TH} is determined based on the magnitude of the current suppliable from the battery 11 to the air conditioning unit 16, the external device 25, and the auxiliary equipment 15 collectively.

As described above, when the threshold value P_{TH} is set based on the magnitude of the current suppliable from the battery 11 to the air conditioning unit 16, the external device 25, and the auxiliary equipment 15 collectively, the threshold value P_{TH} is set according to the power capacity of the cable harness 18 and the rated current of the fuse 19. Therefore, even when the cable harness 18 is made thinner compared to the related art, it is particularly easy to supply power within the range of the power capacity (the rated current of the fuse 19).

In the power supply control method according to any one of the first embodiment, the second embodiment, or the modifications, the output power P_{OUT} of the battery 11 is distributed by the power supply circuit (the accessory power box 14) into the air conditioning power P_{AIR}, the externally-supplying power P_{EX}, and the auxiliary power P_{AUX}, and the threshold value P_{TH} is determined based on the thickness of the cable harness 18 connecting the battery 11 and the power supply circuit (14).

As described above, when the threshold value P_{TH} is set based on the thickness of the cable harness 18, the threshold value P_{TH} is directly set according to the power capacity of the cable harness 18. Therefore, even when the cable harness 18 is made thinner compared to the related art, it is easy to supply power within the range of the power capacity (the rated current of the fuse 19).

In the power supply control method according to any one of the first embodiment, the second embodiment, or the modifications, the output power P_{OUT} of the battery 11 is distributed by the power supply circuit (the accessory power box 14) into the air conditioning power P_{AIR}, the externally-supplying power P_{EX}, and the auxiliary power P_{AUX}, and the threshold value P_{TH} is determined based on the rated current of the fuse 19 provided at the connection portion between the battery 11 and the power supply circuit (14).

As described above, when the threshold value P_{TH} is set according to the rated current of the fuse 19, the threshold value P_{TH} is substantially set according to the power capacity of the cable harness 18. Therefore, even when the cable harness 18 is made thinner compared to the related art, it is easy to supply power within the range of the power capacity (the rated current of the fuse 19).

In the power supply control method according to any one of the first embodiment, the second embodiment, or the modifications, when the accessory power P_{ACC} exceeds the threshold value P_{TH}, the maximum value of the air conditioning power P_{AIR} is dynamically limited such that the air conditioning power P_{AIR} becomes equal to the surplus power P_{SUR} obtained by subtracting the externally-supplying power P_{EX} and the auxiliary power P_{AUX} from the threshold value P_{TH}.

As described above, in the dynamic limit mode in which the maximum value of the limited air conditioning power P_{AIR} (limited air conditioning power P_{AIR}') is dynamically changed when limiting the air conditioning power P_{AIR}, the air conditioning unit 16 can be utilized to the maximum extent within the range of the surplus power P_{SUR}.

In the power supply control method according to any one of the first embodiment, the second embodiment, or the modifications, when the accessory power P_{ACC} exceeds the threshold value P_{TH}, the air conditioning power P_{AIR} is limited such that the maximum value of the air conditioning power P_{AIR} becomes equal to or below a predetermined fixed value.

As described above, in the static limit mode in which the maximum value of the limited air conditioning power P_{AIR} (the limited air conditioning power P_{AIR}') is statically determined when limiting the air conditioning power P_{AIR}, it is especially easy to suppress the accessory power P_{ACC} to the threshold value P_{TH} or below reliably.

The power supply control method according to any one of the first embodiment, the second embodiment, or the modifications includes: the dynamic limit mode in which the maximum value of the air conditioning power P_{AIR} is dynamically limited such that the air conditioning power P_{AIR} becomes equal to the surplus power P_{SUR} obtained by subtracting the externally-supplying power P_{EX} and the auxiliary power P_{AUX} from the threshold value P_{TH}; and the static limit mode in which the air conditioning power P_{AIR} is limited such that the maximum value of the air conditioning power P_{AIR} becomes equal to or below a predetermined fixed value, wherein when the accessory power P_{ACC} exceeds the threshold value P_{TH}, the air conditioning power P_{AIR} is limited by either the dynamic limit mode or the static limit mode according to the setting of the user.

As described above, by enabling switching between the dynamic limit mode and the static limit mode, the user can select, according to their own will, the mode of use of the air conditioning unit 16, whose supplied power is limited, according to the specific circumstances. For example, when the user wishes to give priority to power supply to the external device 25 while also wanting to use the air conditioning to the maximum extent possible, this can be realized by selecting the dynamic limit mode. In addition, when the user considers that simply maintaining the vehicle cabin temperature is sufficient and wishes to give the highest priority to maintaining the output (the function) of the external device 25, this can be realized by selecting the static limit mode.

In the power supply control method according to any one of the first embodiment, the second embodiment, or the modifications, a setting for invalidating the limitation of the air conditioning power P_{AIR} when the accessory power P_{ACC} exceeds the threshold value P_{TH} is accepted. Then, when the limitation of the air conditioning power P_{AIR} is invalidated, if the accessory power P_{ACC} exceeds the threshold value P_{TH}, the accessory power P_{ACC} is suppressed to the threshold value P_{TH} or below by limiting the externally-supplying power P_{EX}.

As described above, when the limitation of the air conditioning power P_{AIR} is invalidated (prohibited) by user setting, it is preferable to suppress the accessory power P_{ACC} to the threshold value P_{TH} or below by limiting the externally-supplying power P_{EX}. This is to prevent the accessory power P_{ACC} from exceeding the power capacity of the cable harness 18 (the rated current of the fuse 19).

In the power supply control method according to any one of the second embodiment or the modifications, when the output power P_{OUT} of the battery 11 is lower than the threshold value P_{TH} and the accessory power P_{ACC} exceeds the output power P_{OUT} of the battery 11, the accessory power P_{ACC} is suppressed to the output power P_{OUT} of the battery 11 or below by limiting the air conditioning power P_{AIR}.

As described above, when the output power P_{OUT} of the battery 11 is lower than the threshold value P_{TH} due to a decrease in SOC or the like, by limiting the air conditioning power P_{AIR} the accessory power P_{ACC} can be suppressed within the range of the output power P_{OUT} of the battery 11. In other words, even in a situation in which the output power P_{OUT} of the battery 11 becomes the bottleneck for the accessory power P_{ACC}, it is preferable to perform the power supply control in the same manner as in the situation in which the threshold value P_{TH} (the power capacity of the cable harness 18 and the rated current of the fuse 19) becomes the bottleneck. As a result, the external device 25 can continue to be used without experiencing a decrease in output or malfunction due to insufficient power.

The power supply control device according to any one of the first embodiment, the second embodiment, or the modifications is the power supply control device (the controller 28) configured to control, when feeding power from the battery 11 of the stopped electric vehicle 100 to the air conditioning unit 16 of the vehicle cabin, the external device 25, and the auxiliary equipment 15, the air conditioning power P_{AIR} and the externally-supplying power P_{EX}, the air conditioning power P_{AIR} being power supplied to the air conditioning unit 16, the externally-supplying power P_{EX} being power supplied to the external device 25. This power supply control device (28) is configured to: compute the accessory power P_{ACC}, the accessory power P_{ACC} being the total value of the air conditioning power P_{AIR}, the externally-supplying power P_{EX}, and the auxiliary power P_{AUX}, the auxiliary power P_{AUX} being power supplied to the auxiliary equipment 15; set the threshold value P_{TH} for the accessory power P_{ACC}; and when the accessory power P_{ACC} exceeds the threshold value P_{TH}, suppress the accessory power P_{ACC} to the threshold value P_{TH} or below by limiting the air conditioning power P_{AIR}.

As described above, when the accessory power P_{ACC} exceeds the threshold value P_{TH} and it is not possible to supply sufficient power to both the air conditioning unit 16 and the external device 25, by limiting the air conditioning power P_{AIR}, it is possible to supply power within the range of the power capacity (the rated current of the fuse 19) even when the cable harness 18 is made thinner compared to the related art. As a result, even in a situation in which the accessory power P_{ACC} must be limited due to the thinness of the cable harness 18 and the rated current of the fuse 19, the external device 25 can continue to be used without experiencing a decrease in output or malfunction due to insufficient power. Then, when the external device 25 and the air conditioning unit 16 are used together, many users wish to give priority to the function of the external device 25, so the continued use of the external device 25 tends to match the user's wishes.

The embodiments and modifications of the present invention have been described above, but the configurations described in the above embodiments and modifications represent only a part of the application examples of the present invention and are not intended to limit the technical scope of the present invention.

## Claims

1. A power supply control method of controlling, when feeding power from a battery of a stopped electric vehicle to an air conditioning unit of a vehicle cabin, an external device, and auxiliary equipment, air conditioning power and externally-supplying power by a control device of the electric vehicle, the air conditioning power being power supplied to the air conditioning unit, the externally-supplying power being power supplied to the external device, the power supply control method comprising:
computing accessory power, the accessory power being a total value of the air conditioning power, the externally-supplying power, and auxiliary power, the auxiliary power being power supplied to the auxiliary equipment;
setting a threshold value for the accessory power; and
suppressing, when the accessory power exceeds the threshold value, the accessory power to the threshold value or below by limiting the air conditioning power.

2. The power supply control method according to Claim 1, wherein
the threshold value is determined based on a magnitude of a current suppliable from the battery to the air conditioning unit, the external device, and the auxiliary equipment collectively.

3. The power supply control method according to Claim 2, wherein
an output power of the battery is distributed by a power supply circuit into the air conditioning power, the externally-supplying power, and the auxiliary power, and
the threshold value is determined based on a thickness of a cable harness connecting the battery and the power supply circuit.

4. The power supply control method according to Claim 2, wherein
an output power of the battery is distributed by a power supply circuit into the air conditioning power, the externally-supplying power, and the auxiliary power, and
the threshold value is determined based on a rated current of a fuse provided at a connection portion between the battery and the power supply circuit.

5. The power supply control method according to Claim 1, wherein
when the accessory power exceeds the threshold value, a maximum value of the air conditioning power is dynamically limited such that the air conditioning power becomes equal to a surplus power obtained by subtracting the externally-supplying power and the auxiliary power from the threshold value.

6. The power supply control method according to Claim 1, wherein
when the accessory power exceeds the threshold value, the air conditioning power is limited such that a maximum value of the air conditioning power becomes equal to or below a predetermined fixed value.

7. The power supply control method according to Claim 1, further having
a dynamic limit mode in which a maximum value of the air conditioning power is dynamically limited such that the air conditioning power becomes equal to a surplus power obtained by subtracting the externally-supplying power and the auxiliary power from the threshold value, and
a static limit mode in which the air conditioning power is limited such that the maximum value of the air conditioning power becomes equal to or below a predetermined fixed value, wherein
when the accessory power exceeds the threshold value, the air conditioning power is limited by either the dynamic limit mode or the static limit mode according to a setting of a user.

8. The power supply control method according to Claim 1, wherein
a setting for invalidating the limitation of the air conditioning power when the accessory power exceeds the threshold value is accepted, and
when the limitation of the air conditioning power is invalidated, if the accessory power exceeds the threshold value, the accessory power is suppressed to the threshold value or below by limiting the externally-supplying power.

9. The power supply control method according to Claim 1, wherein
when the output power of the battery is lower than the threshold value and the accessory power exceeds the output power of the battery, the accessory power is suppressed to the output power of the battery or below by limiting the air conditioning power.

10. A power supply control device configured to control, when feeding power from a battery of a stopped electric vehicle to an air conditioning unit of a vehicle cabin, an external device, and auxiliary equipment, air conditioning power and externally-supplying power, the air conditioning power being power supplied to the air conditioning unit, the externally-supplying power being power supplied to the external device, wherein
the power supply control device is configured to: compute accessory power, the accessory power being a total value of the air conditioning power, the externally-supplying power, and auxiliary power, the auxiliary power being power supplied to the auxiliary equipment;
set a threshold value for the accessory power; and
when the accessory power exceeds the threshold value, suppress the accessory power to the threshold value or below by limiting the air conditioning power.
